# EUROPEAN PATENT APPLICATION

(11) **EP 1 398 943 A1**
(43) Date of publication of application: **17.03.2004**
(21) Application number: 02078793.3
(22) Date of filing: 16.09.2002
(51) Int. Cl.: H04M 3/436, H04M 1/57

(54) **Telecommunication system**

(71) Applicant: Koninklijke KPN N.V., 9726 AE Groningen (NL)
(72) Inventor: Vervuurt, Fransiscus Elisabeth Willem, 1221 BR Hilversum (NL)
(74) Representative: Prins, Adrianus Willem

(57) **Abstract**

Telecommunication system, comprising a telecommunication network (1,2,6), first and second terminals (4...8). The system comprises call signal means (9,10,12,17), accessible by the first terminals' users, fit for transmitting a call signal to the selected second terminal which comprises one or more signal elements which are specific for the relevant calling first terminal or its user.

The call signal means may be fit for entering or modifying said signal elements by the relevant first terminal's user during or prior to call setup and to store the signal elements in storing means (17) within the first terminal or in storing means (9) outside the first terminal. The call signal means are fit to retrieve said signal elements guided by second terminals' identifiers. The signal elements may relate to an audible calling signal e.g. a ringtone signal or a message, or to a visible calling signal e.g. a caller specific picture or video. The signal elements may also comprise an address link to a source of audible and/or visible data or may comprise a multimedia page.

## Description

### FIELD AND BACKGROUND

The invention refers to a telecommunication system, comprising a telecommunication network, first terminals and second terminals each to be operated by users, each first terminal being fit to set up a call to a second terminal selected by the relevant first terminal's user. The invention also relates to a terminal fit to call another terminal via the telecommunication network, as well as a terminal fit to be called by another terminal.

Such a telecommunication system is generally known. After a first terminal initiates (sets up) a call to a selected second terminal, the telecommunication system transmits a call signal to the selected second terminal which causes the second terminal to produce an audible call or notification signal e.g. in the form of a "ringtone" and/or a visible notification e.g. in the form of display of the first terminal's network node number (e.g. telephone number, calling line identifier - CLI).

In known telecommunications systems a second terminal's user only can see who is calling before answering the call by inspecting the calling terminal's CLI displayed at a called terminal's display, if the called terminal supports this feature and the calling terminal allows CLI display at the called terminal side.

The concept of "telecommunication" is considered here to comprise all kinds of speech, data, graphics, still pictures and moving pictures communications, including e.g. telephony, videophony, videoconferencing, chatting via IP, SMS, MMS, data transfer etc. etc. "Calls" are considered to have the meaning of "session calls" in general, not being restricted to telephony related calls. The terms "ringtone signal", "notification signal" and "call signal" are considered to have the same meaning.

### SUMMARY

One aspect of the invention is to present to a called party advanced presentations (or representations) of the calling party, to be presented to the called party before answering (or refusing) a call.

A second aspect is that a calling party may determine and include "ringtone" information to be used at the called party's side when a call from the calling party is received.

Another aspect of the invention is to enable called parties to hear or see from the "ringtone" who is calling.

Still another aspect of the invention is to enable calling parties to set or amend their "introductory" presentation to called parties prior to "live" contact.

A further aspect of the invention is to enable a presentation of a "commercial" prior to a call, e.g. in multimedia or HTML form, including e.g. reply options e.g. by means of reply "buttons", prior or additional to the proper "live" connection.

One more aspect of the invention is to enable the called user to allow or disallow selectively the activation of caller specific notifications, i.e. for some calling users the calling user determined notification ("ringtone") function may be activated and for other callers it may be disactivated.

The telecommunication system advantageously may comprise call signal means which are accessible by the first terminals' users and which are fit for transmitting a call signal to the selected second terminal which comprises one or more signal elements which are specific for the relevant calling first terminal or its user and which are fit to produce, at the called second terminal's side a notification which is set by the calling user.

The call signal means may be fit for entering or modifying said signal elements by the relevant first terminal's user during call setup or prior to setup. A calling user may enter a spoken introductory message to the receiving party prior to answering the call, e.g. in the form of a text entered by the caller like "Hello, Jack'd like to speak with you..". Additionally, a picture of Jack could be included to be sent to the called terminal.

At least part of said signal elements may be stored in storing means within the first terminal.

Alternatively, at least part of said signal elements may be stored in storing means outside the first terminal, preferably in a database within the telecommunication network. In this case the call signal means preferably are fit to retrieve the signal elements guided by first terminals' identifiers, like e.g. the first terminal's node address e.g. telephone number, CLI or SIM card identifier.

An interesting opportunity may be offered when said signal elements also are retrievable guided by second terminals' identifiers. This offers the option to have the caller to present himself to a first counter party (second terminal) in one way (e.g. "Jack'd like with speak you") but to a second counter party in an alternative way (e.g. "Dr. Jack Johnson, KPN Telecom Europe").

The signal elements may relate to an audible calling (notification) signal e.g. to be output by the called second terminal under control of said signal elements. Such audible calling signal may comprise e.g. a ringtone signal, a ("spoken") message or a music or sound clip. The signal elements also may relate to a visible calling signal (notification message) to be displayed by the relevant second terminal under control of said signal elements. Such visible calling signal may e.g. comprise a caller specific picture or video clip, e.g. showing the caller himself or herself but may also show e.g. a product or service advertisement.

The signal elements may -solely or additionally- comprise an address link, e.g. an internet link, to a source of audible and/or visible data. The signal elements may also comprise a multimedia page (e.g. internet page) or a part (e.g. specially adapted to the terminal's screen dimensions) of such page.

As a preferred option, called terminals may include software or hardware means by which the user may switch on or off the caller dependent way of notification. Preferably, switching on or off may be controlled by the relevant calling terminal's identifier, e.g. the calling line identifier (CLI) or the like.

### BRIEF DESCRIPTION OF THE DRAWINGS

Figure 1 shows a telecommunication system fit for implementation of the invention.
Figure 2 shows an alternative telecommunication system fit for implementing the invention.
Figures 3 and 4 show schematically terminals fit to be used in the telecommunication system according to the invention.

### DETAILED DESCRIPTION OF THE DRAWINGS

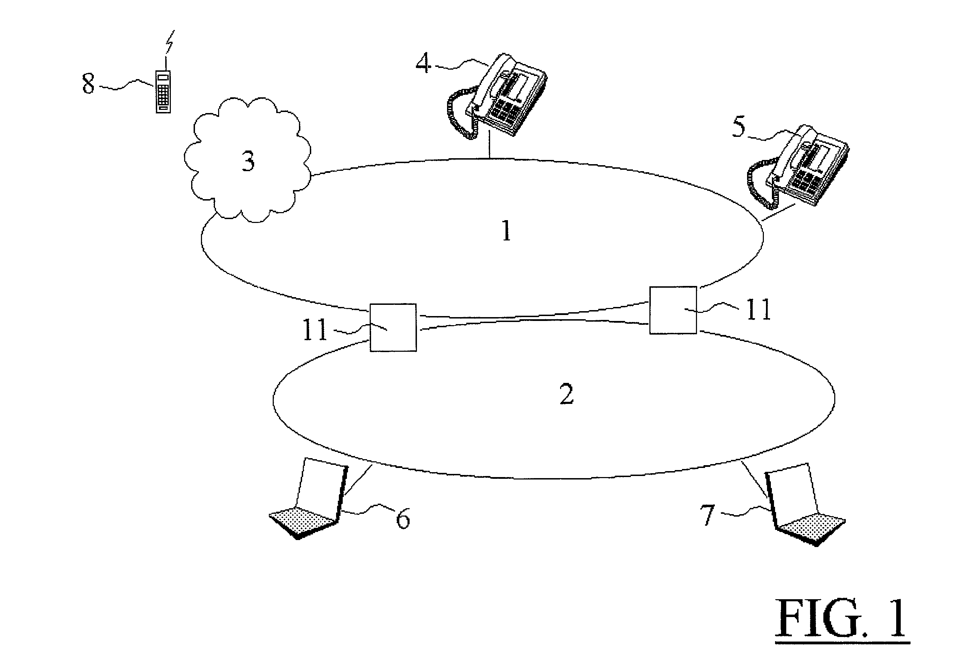

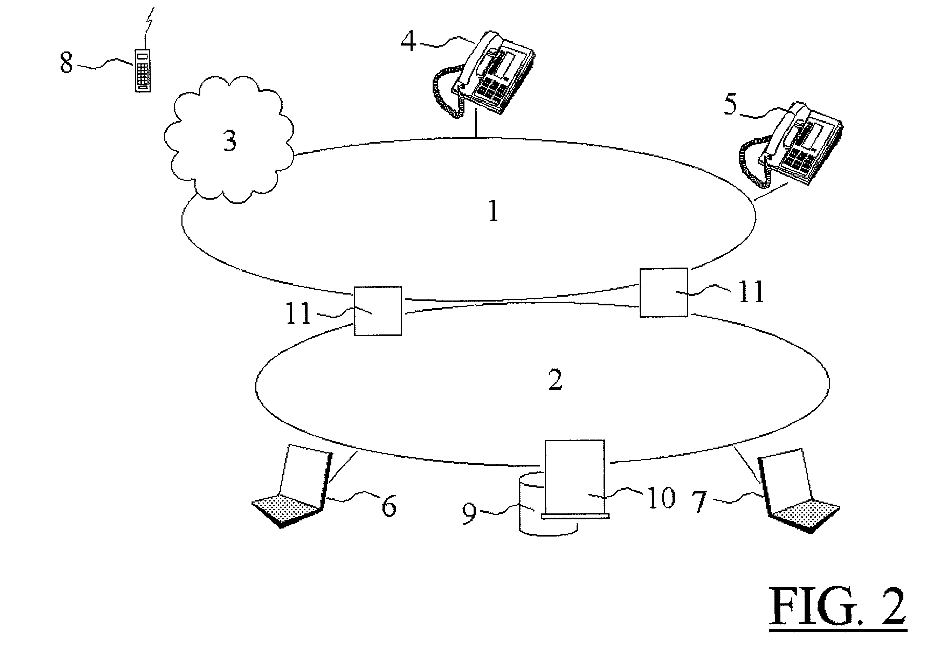

Both figure 1 and figure 2 show a telecommunication system, comprising a telecommunication network, which is constituted by a telephony/data network 1, an IP network (e.g. the internet) 2 and a mobile network 3. Via said networks various kinds of terminals may communicate with each other: fixed telephone type terminals 4 and 5, data/graphics oriented terminals 6 and 7 and mobile telephone and/or data oriented terminals 8. Each of those terminals may be operated -by their (not shown) users- to call another ("second") terminal or to be called by another ("first") terminal.

The telecommunication system of figures 1 and 2 comprises call signal means, accessible by calling terminals' users, which call signal means are fit for transmitting a call (notification) signal to the relevant called terminal; the call signal comprises one or more signal elements which are specific for the relevant calling terminal or its user. The call signal means may be fit for entering or modifying said signal elements by the relevant first terminal's user during call setup or prior to call setup, while the call signal means may be fit to store such signal elements in storing means within or outside the calling terminal.

In figure 1 the call signal means are incorporated in the terminals, in the form of dedicated software and/or hardware. In figure 2 the call signal means are at least partially incorporated in a call signal server (CSS) 9, including a database 10.

In figure 1 a (first) terminal (e.g.) 8 may initiate a call to a (second) terminal (e.g.) 5 via the telephony/data network 1. Both terminals are able to exchange speech and/or data with each other via the telephony/data network 1 after terminal 5 has answered the call from terminal 8. Moreover -if terminals 5 and 8 are modern terminals- multimedia content may be exchanged between those terminals.

Prior to or during the call setup to terminal 5, the user of terminal 8 may set a call signal that differs from the standard call signal, generated by the telephony/data network 1 and that may replace the standard call signal to terminal 5 or may be added to the standard call signal. To be able to do so, terminal 5 has to be provided with a software and/or hardware module which is able to receive a "signal" fit to be used directly as the desired call signal, or fit to set or influence a call signal which is generated as such within the called terminal 5.

Caller specific call signals may be transmitted to the called terminals via the telephony/data network 1 or -e.g. if network 1 and/or its protocols are not proper fit for transmission of such call signals- via the IP based network 2, via suitable nodes 11. Use may be made of state-of-the-art protocols like the "Session Initiation Protocol" (SIP) launched by the "Internet Engineering Task Force" (IETF) [http://www.cs.columbia.edu/sip/]

For instance, the calling user -using terminal 8- may enter a welcome message to the called user, prior to "lifting the hook", e.g. ""Hello this is Jack Johnson". If the caller wants to re-use his welcome message, the welcome message is to be stored in a local or central database from which the welcome message can be retrieved again. The database may be filled with various different messages, to be selected by the calling user by means of a software and/or hardware user interface. The messages may be stored e.g. in the form of MP3 or WAV files or other data files. Instead of audible welcome messages, also visible welcome messages may be used, to be stored in the form of e.g. MPEG or JPEG files.

It may also be an option to use a control signal that comprises one or more parameters for influencing the second terminal's way of notification ("ringing"). In this case not a caller specific message is output by the called terminal but a caller specific notification sound ("ringtone"). The parameters can also be stored in a local or central database.

If various messages or control parameters are stored in the calling terminal's "welcome message buffer" or "notification parameter buffer" (hereafter called "local call signal database" LCSD), the call signals buffered in it optionally could be stored and retrieved guided by called terminals' identifiers e.g. the called terminals telephone numbers, terminal addresses etc.. In this way the calling signal transmitted to different terminals may automatically comprise different message texts , sounds or images, or be set to different parameter values respectively. For instance, the call message to a business relation might sound, retrieved by the called (business) telephone number, as: "This is Dr. Jack Johnson of KPN Telecom Europe", while the message notifying a call to Jack Johnson's private address might sound like "Hi, this is Jack; anyone home?". Optionally, the preferred notification may be selected for each new call or session setup.

Besides caller specific audible messages and "ringtones", also visible notification "messages" may be output by the selected called terminal. Such visible calling signals may comprise caller specific pictures or video clips.

One or more calling signal elements may comprise an address link ("hyperlink") to a source of audible and/or visible data. One or more signal elements even may comprise a multimedia page or part of it.

In figure 2 the call signal means are not completely incorporated in the terminals like in the embodiment of figure 1, but partly in a central call signal server (CCSS) 9, including a database 10. , Also in this embodiment it may be needed for the terminals to be provided with dedicated (or proper general purpose) software and/or hardware fit to co-operate with the CSS 9.

In figure 2 again a (first) terminal (e.g.) 8 may initiate a call to a (second) terminal (e.g.) 5 via the telephony/data network 1. Both terminals are able to exchange speech and/or data with each other via the telephony/data network 1 after terminal 5 has answered the call from terminal 8. Moreover -if terminals 5 and 8 are modern terminals- multimedia content may be exchanged between those terminals e.g. via multimedia network 2.

Prior to or during the call setup to terminal 5, the user of terminal 8 may set a call signal that differs from the standard call signal, generated by the telephony/data network 1 and that may replace the standard call signal to terminal 5 or may be added to the standard call signal. To be able to do so, terminal 5 is provided with a software and/or hardware module fit for the reception of a "signal" fit to be used directly as a call signal at the called terminal's end or fit to set (e.g. select) or influence (e.g. modify) a call signal generated within the called terminal 5.

The caller specific call signals may be transmitted to the called terminals via the telephony/data network 1 or -e.g. if network 1 and/or its protocols are not proper fit for transmission of such call signals- via the IP based multimedia network 2, via suitable nodes 11. Use may be made of state-of-the-art protocols like the "Session Initiation Protocol" (SIP) launched by the "Internet Engineering Task Force" (IETF).

The calling user -using terminal 8- may select and enter a welcome message to the called user, prior to "lifting the hook", e.g. ""Hello this is Jack Johnson". The welcome message can be retrieved in the database 10 of the central call signal server (CCSS) 9 after making a connection with the CCSS 9. The database 10 may be filled with various different sound and/or image messages, to be initially entered and selected prior to subsequent calls by means of the calling terminal's software and/or hardware user interface. The various messages may be stored in the CCSS's database 10 e.g. in the form of WAV, MP3, MPEG or JPEG files. Instead of audible and/or visible welcome messages, control signals may be used and stored in database 10 comprising one or more parameters for controlling the called (second) terminal 5 and for thus influencing the way of second terminal's "ringing".

The messages and/or control parameters entered by various terminal users preferably may be stored in the CCSS 9 linked to an identifier of the relevant terminals, e.g. their "telephone numbers". Additionally, the call signals thus stored in the CCSS 9 optionally may be linked to (called) terminal identifiers e.g. the called terminals telephone numbers. In this way calls to different terminals may be notified by different notification messages or "ringtones" pre-set by the relevant calling party. In that way, the call to a business relation might sound, retrieved by the called (business) telephone number, as: 'This is Dr. Jack Johnson of KPN Telecom Europe", while the message notifying a call to a private address might sound like "Hi, this is Jack; anyone home?"

Also in this exemplary embodiment, audible calling signals may be replaced or supplemented by visible calling (notification) signals to be displayed by the selected called terminal under control of said signal elements selected by the calling terminal 8 in the database 10. Such visible calling signals may comprise caller specific pictures or video clips. Signal elements retrieved in the CCSS 9 may also comprise an address link ("hyperlink") to a source of audible, visible or multimedia data.

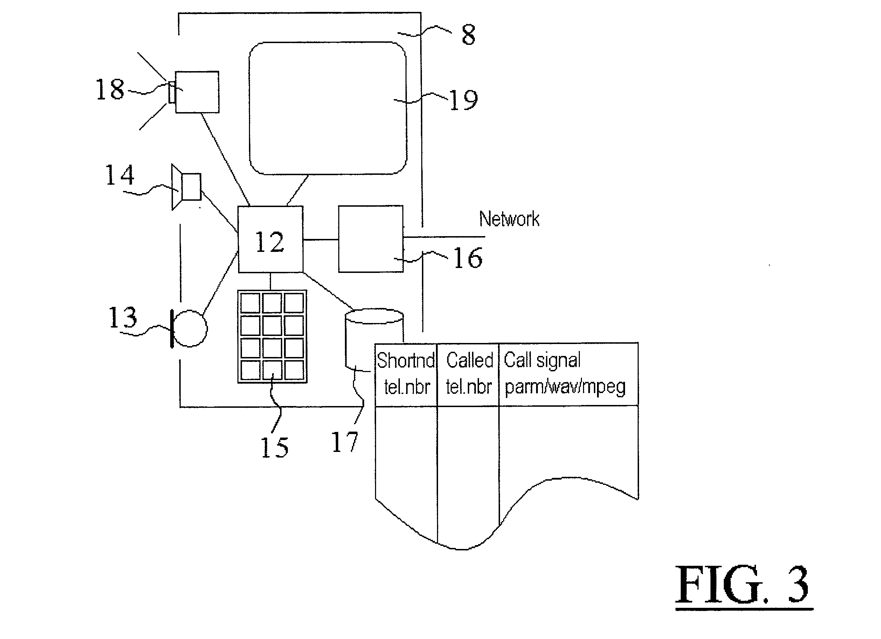

Figure 3 shows schematically a telephone terminal (e.g. terminal 8 or 4), comprising a controller 12, a microphone 13, a loudspeaker 14, a keypad 15 a network interface 16, and a database 17. Moreover the telephone terminal comprises a video camera 18 and a picture screen 19.

The database 17 may be "filled" with call signal data, linked to telephone numbers of "to be called" telephone subscribers. The database 17 may be used as personal address book of the relevant terminal user, e.g. to enable to call terminal numbers, registered in database 17, by entering shortened call numbers ("Shortnd tel.nbr") linked to them ("Called tel.nbr"). Besides enabling shortened calling, the database 17 also may comprise data that influence the way in which the called subscriber is to be notified: the call/ringtone and/or (audio/video) message ("Call signal parm/wav/mpeg"). To that end the terminal's user may fill the database 17 with parameters for controlling the notification signal at the called terminal's end and/or (audio and/or video) message files (e.g. in WAV and/or MPEG format). "Ringtone" parameters may be entered and modified via e.g. the keypad 15, while sound files of spoken call messages like "Hello, Jack'd like to speak with you" may be recorded via the microphone 14. Still pictures and/or video clips may be recorded by means of the telephone camera 18, which can be displayed at the called party's terminal by the telephone screen 19. If a caller cannot be found in the database 17, the controller 12 may select a default parameter and/or message or follow the standard "classical telephony" way resulting in a classical notification sound in the called terminal. Video or sound messages may also be recorded via a (e.g. RS-232) connection with an external apparatus, like a PC, external camera, microphone etc.

As the terminal from figure 3 comprises a local database 17 from which "signal elements which are specific for the relevant calling first terminal or its user" can be retrieved and used during call setups, there is no need for a central database e.g. within the (telephone or multimedia) network. The terminal 8 may be linked to e.g. the Internet, while internet "hyperlinks" may be included in the database 17.

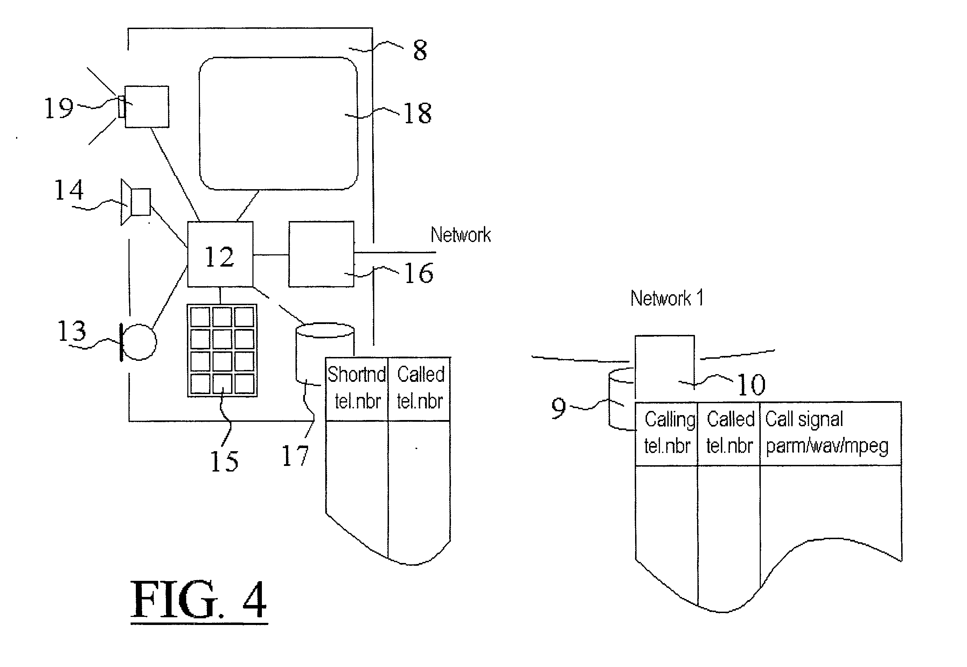

Figure 4 shows schematically the telephone terminal from figure 3, to be used with a central database e.g. within the (telephone or multimedia) network. The telephone terminal also comprises a controller 12, a microphone 13, a loudspeaker 14, a keypad 15 a network interface 16, a database 17, a video camera 18 and a picture screen 19. The database 17 is optional and may only serve short number calling by linking short call numbers ("Shortnd tel.nbr") to extended (normal) numbers ("Called tel.nbr").

The signal elements that are specific for the calling first terminal or its user, to be used to influence the way in which the called subscriber is to be notified, the call/ringtone and/or (audio/video) message ("Call signal parm/wav/mpeg") are to be stored, in this architecture, in the central database 9 of server 10, shown in figure 2. Also the database 9 may -as session call parameters- include internet "hyperlinks, pointing to e.g. sound or video clips to be used as notification item.

While, in this architecture, the database 9 is to be used by several users, the signal elements, specific for the individual users, are linked to the (calling) users' telephone numbers (or other user or terminal identifiers). Although the signal elements may be exclusively specific for one user or terminal, some signal elements may be used by all users/terminals or specific groups of users/terminals, e.g. users/terminals belonging to a certain group, company, church, association, family, etc.

Database 9 thus comprises a retrieval entry for calling terminal (or user) identifier e.g. telephone number ("Calling tel.nbr"), called terminal identifier e.g. telephone number ("Called tel.nbr") and the signal elements ("Call signal parm/wav/mpeg") specific for the calling terminal/users to be used to notify when calling other terminals/users.

For instance, when Jack Johnson (telephone number 0612345678) wants to call a business relation having telephone number 0687654321, he will dial 0687654321. As the telephone system "knows" from his telephone number, Jack has a subscription to the "personal notification service", executed by server 10, his call is routed to server 10. The server 10 now will retrieve Jack's set of personalized notifications, guided by Jack's calling telephone number 0612345678, together with the dialed telephone number 0687654321, resulting in a signal element in the form of a WAV formatted speech object comprising the spoken text "This is Dr. Jack Johnson of KPN Telecom Europe", which will, after be sent to the dialed terminal 0687654321, be heard via the dialed terminal's loudspeaker 14. Possibly, the audible message may be accompanied by a short video clip of "KPN Telecom Europe". Both the audible and the visual part of the message may be have the MPEG format , established for the compression of digital video and audio data

In the same way, Jack Johnson may call his family by dialing telephone number 0698765432. Database 9 now will retrieve Jack's set of personal notification files guided by his CLI 0612345678, detected by server 10, and selects the stored (e.g. MPEG and/or parameters) file that previously has been linked by Jack to his family's telephone number 0698765432, resulting in a notification "Hello, it's me". This notification sound may be extended by a specific ringtone, set by a ringtone parameter and/or by a video clip, e.g. a clip of "smiling Jack", a cartoon or another kind of picture or video.

Optionally, the software and/or hardware 12 of the (called) terminals may include an option, to be set by the user, to enable/disable caller dependent notifications. Preferably, this option may be controlled by the value of each calling terminal's identifier, e.g. the calling line identifier (CLI) or the like. In this way, one call, e.g. originated by Jack Johnson, may be enabled to be notified by a Jack Johnson specific notification, while other calls, e.g. stored in an "exclusion list" stored in the database 17 or 9, deliberately are excluded and only will be notified by means of a standard way of notification. It is noted that this option of the called (second) terminals may be incorporated in the controller module 12, depicted in figure 3 and 4 for calling (first) terminals. The ratio is that each calling terminal of course may also be used as called (second) terminal. So controller 12 may be used for controlling the calling process, including selection of the preferred call signal etc., as well as controlling the call reception process, including to enable/disable further processing of caller specific notifications, optionally, guided by the calling terminal's identifier.

## Claims

1. Telecommunication system, comprising a telecommunication network (1,2), first and second terminals (4...8) each to be operated by users, each first terminal being fit to set up a call to a second terminal selected by the relevant first terminal's user, the telecommunication system comprising call signal means (9,10,12,17), accessible by the first terminals' users, fit for transmitting a call signal to the selected second terminal which comprises one or more signal elements which are specific for the relevant calling first terminal or its user.

2. Telecommunication system according to claim 1, wherein said call signal means are fit for entering or modifying said signal elements by the relevant first terminal's user during call setup.

3. Telecommunication system according to claim 1, wherein said call signal means are fit for entering or modifying said signal elements by the relevant first terminal's user prior to call setup.

4. Telecommunication system according to claim 3, wherein said call signal means are fit to store at least part of said signal elements in storing means (17) within the first terminal.

5. Telecommunication system according to claim 3, wherein said call signal means are fit to store at least part of said signal elements in storing means (9) outside the first terminal.

6. Telecommunication system according to claim 5, wherein said call signal means are fit to retrieve said signal elements guided by an identifier of the relevant first terminal.

7. Telecommunication system according to claim 5, wherein said call signal means are fit to retrieve said signal elements guided by an identifier of the relevant second terminal.

8. Telecommunication system according to claim 1, wherein said one or more signal elements relate to an audible calling signal to be produced by the relevant selected second terminal under control of said one or more signal elements.

9. Telecommunication system according to claim 8, wherein said audible calling signal comprises a ringtone signal

10. Telecommunication system according to claim 8, wherein said audible calling signal comprises a message.

11. Telecommunication system according to claim 1, wherein said one or more signal elements relate to a visible calling signal to be produced by the relevant selected second terminal under control of said one or more signal elements.

12. Telecommunication system according to claim 11, wherein said visible calling signal comprises a caller specific picture.

13. Telecommunication system according to claim 11, wherein said visible calling signal comprises a caller specific video.

14. Telecommunication system according to claims 8 and/or 11, wherein said one or more signal elements comprise an address link to a source of audible and/or visible data.

15. Telecommunication system according to claims 8 and/or 11, wherein said one or more signal elements comprise at least part of a multimedia page.

16. Telecommunication system according to claim 1, wherein the relevant second terminal comprises means (12) for enabling and/or disabling said one or more signal elements which are specific for the relevant calling first terminal or its user.

17. Telecommunication system according to claim 16, wherein said means (12) for enabling and/or disabling said one or more signal elements which are specific for the relevant calling first terminal or its user are controlled by the value of an identifier of the relevant first terminal.

18. Telecommunication terminal to be operated by a user, fit to call to another terminal via a telecommunication network (1,2) the terminal comprising control means (12, 13, 15, 18) for controlling call signal means (9,10,17) fit for transmitting a call signal to the called terminal which comprises one or more signal elements which are specific for the calling terminal or its user.

19. Telecommunication terminal according to claim 18, wherein said call signal means comprise storing means (17) within the terminal, fit to store at least part of said signal elements.

20. Telecommunication terminal according to claim 18, wherein said call signal means comprise storing means (9) outside the terminal, fit to store at least part of said signal elements, said control means being fit for accessing the outside storing means via the telecommunication network.

21. Telecommunication terminal according to claim 18, wherein said control means (12) are fit to retrieve said signal elements guided by an identifier of the calling terminal.

22. Telecommunication terminal according to claim 18 or 21, wherein said control means (12) are fit to retrieve said signal elements guided by an identifier of the called terminal.

23. Telecommunication terminal according to claim 18, wherein said one or more signal elements relate to an audible calling signal to be produced by the called terminal under control of said one or more signal elements.

24. Telecommunication terminal according to claim 18, wherein said one or more signal elements relate to a visible calling signal to be produced by the called terminal under control of said one or more signal elements.

25. Telecommunication terminal, fit to be called, via a telecommunication network (1,2), by another terminal, the terminal comprising control means (12) fit to receive and to be controlled by a call signal comprising one or more signal elements which are specific for the calling terminal or its user, the terminal, moreover, comprising output means (14, 19) for outputting signals or messages under control of said received call signal, specific for the calling terminal or its user.

26. Telecommunication terminal according to claim 25, wherein said calling terminal is a terminal according claim 18.

27. Telecommunication terminal according to claim 25, wherein said control means (12) are fit for enabling and/or disabling the control by said one or more signal elements which are specific for the relevant calling terminal or its user.

28. Telecommunication terminal according to claim 27, wherein said control means (12) are fit for enabling and/or disabling the control by said one or more signal elements in dependency of the value of an identifier of the relevant calling terminal.

29. Telecommunication terminal according to claim 25, wherein said output means (14) are fit for outputting audible signals or messages which are specific for the calling terminal or its user.

30. Telecommunication terminal according to claim 25, wherein said output means (19) are fit for outputting visible signals or messages which are specific for the calling terminal or its user.
